Europäisches Patentamt

European Patent Office

Office européen des brevets

(19)

(11) Veröffentlichungsnummer: **0 300 289 B1**

(12) **EUROPÄISCHE PATENTSCHRIFT**

(45) Veröffentlichungstag der Patentschrift: **01.04.92**

(51) Int. Cl.⁵: **B60C 27/06**, F16G 15/02

(21) Anmeldenummer: **88110923.5**

(22) Anmeldetag: **08.07.88**

(54) **Verfahren zum Verbinden zweier Abschnitte einer Gleitschutzkette und Verbindungselement zu seiner Ausführung.**

(30) Priorität: **24.07.87 CH 2827/87**

(43) Veröffentlichungstag der Anmeldung:
**25.01.89 Patentblatt 89/04**

(45) Bekanntmachung des Hinweises auf die
Patenterteilung:
**01.04.92 Patentblatt 92/14**

(84) Benannte Vertragsstaaten:
**AT DE ES FR GB IT SE**

(56) Entgegenhaltungen:
**EP-A- 0 084 354       DE-A- 1 505 004
DE-A- 2 202 740       DE-A- 2 357 880
DE-C- 3 127 956        FR-A- 2 218 210**

(73) Patentinhaber: **Milz Produkte AG
Chefistrasse 70
CH-8637 Laupen(CH)**

(72) Erfinder: **Milz, Arthur
Bodenmühle
CH-8636 Wald(CH)**

(74) Vertreter: **Blum, Rudolf Emil Ernst et al
c/o E. Blum & Co Patentanwälte Vorderberg
11
CH-8044 Zürich(CH)**

## Beschreibung

Die meisten Gleitschutzketten für Fahrzeuge, im folgenden kurz Schneeketten genannt, weisen Verzweigungspunkte auf, an denen mehrere, aus Rund- oder Vierkantgliederketten gebildete Kettenabschnitte zusammengehalten werden. Die Art und Weise dieser Verbindung wirft viele Probleme auf, von denen nur einige kurz erwähnt werden sollen: übermässiger Abrieb des Verbindungselementes, kippen oder rollen desselben beim Bremsen, umständliche Herstellung der Verbindung, Notwendigkeit, das Verbindungselement aus einem anderen Material als die Kettenabschnitte herzustellen, so dass es nach Herstellung der Verbindung nicht sinnvoll zusammen mit den Kettenabschnitten gehärtet werden kann, etc.

Das Schweizer Patent CH-A-654 532 schlägt eine Lösung vor, die sich zwar in der Praxis bewährt hat, aber ein Verbindungsglied aus einem Material erfordert, das verschieden von demjenigen der zu verbindenden Kettenabschnitte ist. Ausserdem ist die Herstellung der Verbindung verhältnismässig kompliziert und lässt sich schlecht automatisieren. Die Erfindung betrifft ein Verfahren zur Verbindung zweier Abschnitte einer Schneekette, welches einfach genug ist, um sich leicht automatisieren zu lassen, und gleichzeitig der Schneekette die erwünschten Betriebseigenschaften gibt. Ausserdem soll ein für die Durchführung des Verfahrens geeignetes Verbindungselement geschaffen werden, welches eine Schneekette mit günstigen Fahreigenschaften ergibt.

In der Patentschrift FR-A-2218210 wird eine Verbindung von Abschnitten einer Gleitschutzkette beschrieben, die ein Verbindungselement mit je einem längsgerichteten Schlitz an seinen beiden Enden aufweist. Die Schlitze sind mindestens so breit wie die Nennglieddicke der Kettenabschnitte. Ein Schenkel eines Kettengliedes wird in den Schlitz eingeführt. Danach wird der Schlitz zusammengepreßt bis der Schenkel darin gefangen ist. Die Glieder führen somit gegenüber dem Verbindungselement kleine Rotationsbewegungen durch, was eine zusätzliche Abnutzung bewirkt.

Mit dem erfindungsgemäßen Verfahren soll diese Abnutzung vermieden werden.

Zu diesem Zweck ist die Erfindung, wie in den Ansprüchen 1 bis 9 beschrieben, definiert.

Im folgenden soll die Erfindung anhand eines Ausführungsbeispieles und mit Hilfe der Zeichnungen näher erläutert werden. Es zeigt

Figur 1 ein Verbindungselement vor dem Herstellen der Verbindung,

Figur 2 einen Schnitt durch das Verbindungselement nach dem Herstellen der Verbindung, und

Figur 3 eine Aufsicht des Verbindungselementes mit den darin gefangenen Kettengliedern.

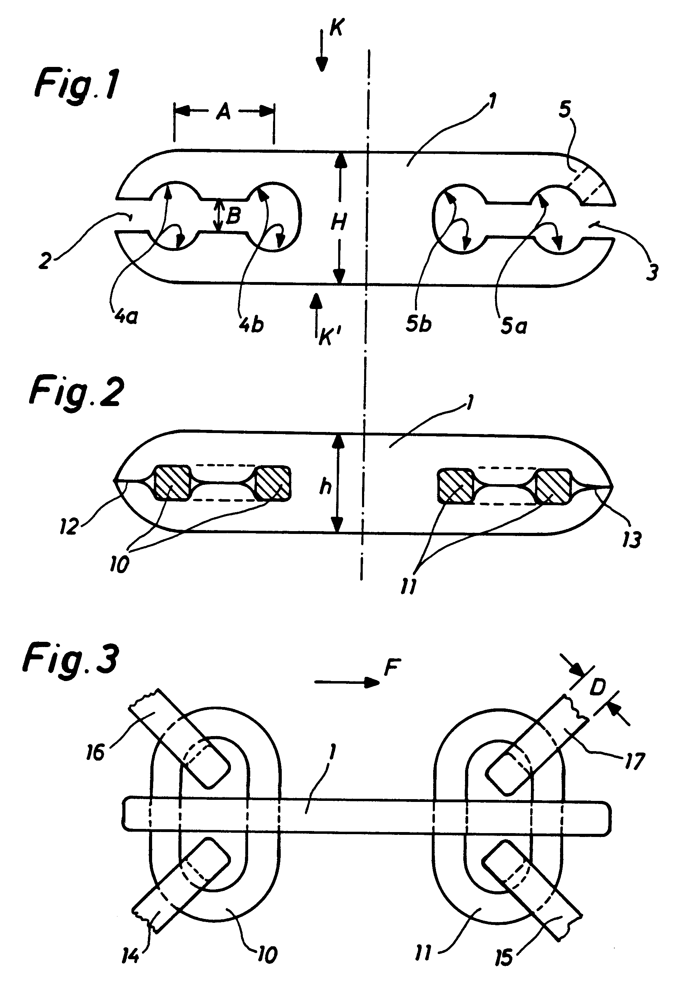

Die Figur 1 zeigt ein Verbindungselement in seiner ursprünglichen Form, vor dem Herstellen der Verbindung. Das Element besteht aus gestanztem Stahlblech, vorzugsweise aus demselben Material wie die zu verbindenden Kettenabschnitte. Das Blech kann ein- bis zweimal so dick wie die Kettenglieder sein, es sind aber auch andere Werte möglich. Das Verbindungselement 1 besitzt an seinen beiden Enden je einen nach aussen hin offenen Schlitz 2,3, wobei die Oeffnung der Schlitze nicht unbedingt axial ausgerichtet sein müssen, wie in der Figur gezeigt, sondern auch seitlich ausgerichtet sein können, wie in 5 gestrichelt angedeutet ist. Jeder Schlitz weist ein Paar von Ausbuchtungen 4a, 4b respektive 5a, 5b auf. Die Breite B des Schlitzes an seinen nicht ausgebuchteten Stellen ist mindestens so gross wie die Nenngliedicke D der zu verbindenden Kettenabschnitte (siehe Figur 3), während der Abstand A zwischen den Ausbuchtungen eines Schlitzes ungefähr gleich der äusseren Breite je eines Kettenabschnittes minus dessen Nenngliedicke ist, so dass nach dem Einschieben eines Gliedes eines Kettenabschnittes in einen Schlitz (wie in Figur 3 gezeigt), die Schenkel des Gliedes in je eine Ausbuchtung zu liegen kommen. Nachdem in jeden Schlitz ein Glied eingeschoben wurde, wird das Verbindungsglied 1 durch zwei Gegenkräfte K, K' zusammengestaucht, bis sich ungefähr die in Figur 2 gezeigte Konfiguration ergibt.

Figur 2 zeigt, wie zwei - zu zwei verschiedenen Kettenabschnitten gehörigen - Kettenglieder 10,11 durch Verformung des Verbindungsgliedes 1 in diesem gefangen sind. Man sieht, dass die ursprüngliche Höhe H des Verbindungselementes auf den kleineren Wert h geschrumpft ist. Dies wird erreicht, indem man die Kräfte K, K' auf die ganze Länge des Verbindungselementes einwirken lässt. Dies ist eine bevorzugte Ausführungsart der Erfindung, weil sie eine ausserordentlich starke Verbindung ergibt. Es wäre aber auch denkbar, die Schlitze durch eine plastische Verformung des Verbindungselementes zu schliessen, welche beispielsweise seine Höhe im zentralen Bereich nicht wesentlich verändert.

Es können die Kräfte K, K' so gross sein, dass nach der Verformung des Verbindungselementes die Glieder nicht nur formschlüssig sondern auch kraftschlüssig darin festgehalten werden. Wenn nötig oder erwünscht, können die äusseren Lippenpaare 12,13 der Schlitze nach der Verformung zusammengeschweisst oder -geleimt werden.

Figur 3 ist eine Draufsicht der Verbindung, bei welcher das Verbindungselement 1 einen ersten Kettenabschnitt mit den Gliedern 10,14,16 mit einem zweiten Kettenabschnitt, der die Glieder 11,15,17 aufweist, verbindet. Es ist zu bemerken, dass es vorteilhaft ist, eine Anzahl von Verbindungselementen, die bei Benützung der Schneekette auf der Lauffläche des Reifens zu liegen kommen, so zu orientieren, dass ihre Längsausdehnung in Fahrtrichtung F liegt, wie in Figur 3 durch einen Pfeil angedeutet. Dies verbessert die Seitenführung des mit der Schneekette versehenen Reifens.

**Patentansprüche**

1. Verfahren zum Verbinden zweier Abschnitte einer Schneekette, dadurch gekennzeichnet, dass die Verbindung mittels eines länglichen, an seinen beiden Enden mit je einem längsgerichteten Schlitz (2, 3) versehenen Verbindungselementes bewerkstelligt wird, wobei jeder Schlitz ursprünglich nach aussen offen und mindestens so breit wie die Nennglieddicke der Kettenabschnitte ist, indem je zwei einander gegenüberliegende Schenkel eines Gliedes (10, 11) eines Abschnittes in jeden der Schlitze eingeführt und die Schlitze dann zusammengepresst werden, bis in jedem Schlitz zwei Schenkel eines Gliedes gefangen sind.

2. Verfahren nach Anspruch 1, dadurch gekennzeichnet, dass das Zusammenpressen beider Schlitze gleichzeitig, durch einen in Richtung der Schlitzbreite auf das Verbindungselement ausgeübten Druck erreicht wird, der hoch genug ist, um das Verbindungselement plastisch zu verformen.

3. Verfahren nach Anspruch 2, dadurch gekennzeichnet, dass der Druck ausgeübt wird, bis die Schlitze an ihrem ursprünglich offenen Ende geschlossen sind.

4. Verfahren nach einem der vorangehenden Ansprüche, dadurch gekennzeichnet, dass die Schlitze nach dem Pressen an ihrem offenen Ende zugeschweisst werden.

5. Verfahren nach einem der vorangehenden Ansprüche, dadurch gekennzeichnet, dass das Verbindungselement nach dem Zusammenpressen der Schlitze zusammen mit den Kettenabschnitten gehärtet wird.

6. Verbindungselement zur Ausführung des Verfahrens nach Anspruch 1, dadurch gekennzeichnet, dass mindestens einer seiner Schlitze zwei Ausbuchtungen aufweist, und dass der Abstand zwischen ihren Mitten im wesentlichen gleich der äusseren Breite der Kettenabschnitte minus ihre Nennglieddicke ist.

7. Verbindungselement nach Anspruch 6, dadurch gekennzeichnet, dass es aus gestanztem Blech besteht.

8. Verbindungselement nach einem der Ansprüche 6 oder 7, dadurch gekennzeichnet, dass es aus demselben Material wie die Kettenabschnitte besteht.

9. Schneekette, bestehend aus mit dem Verfahren nach Anspruch 1 in mehreren Punkten verbundenen Kettenabschnitten, dadurch gekennzeichnet, dass in einer Anzahl dieser Punkte das Verbindungselement in Fahrtrichtung der Schneekette orientiert ist.

**Claims**

1. Method for assembling two sections of a snow chain, characterized in that they are fastened together by an elongated fastening element, the two ends of which comprise a lengthwise slit (2, 3) each, where each slit is originally open towards the exterior and at least as wide as the gauge of the links of the chain sections, the fastening being obtained by introducing into each slit the two opposite legs of a link (10, 11) from one of the sections, and then compressing the slits until two legs of a link are imprisoned in each slit.

2. Method according to claim 1, characterized in that both slits are compressed simultaneously, through the application to the fastening element of a pressure transverse to the slits and strong enough to produce a plastic deformation of the fastening element.

3. Method according to claim 2, characterized in that the pressure is applied until the originally open ends of the slits are closed.

4. Method according to any preceding claim, characterized in that after applying the pressure one shuts by welding the ends of the slits which were originally open.

5. Method according to any preceding claim, characterized in that after compression of the slits the fastening element is hardened together with the chain sections.

6. Fastening element for performing the method of claim 1, characterized in that at least one of its slits comprises two recesses and that the distance between their centres is essentially equal to the outer width of the chain sections less the gauge of their links.

7. Fastening element according to claim 6, characterized in that it is made of punched tin.

8. Fastener element according to one of the claims 6 or 7, characterized in that it is made from the same material as the chain sections.

9. Snow chain composed of several chain sections assembled in several places by the method of claim 1, characterized in that in a plurality of these places the fastening element is oriented in the direction in which the snow chain travels when in use.

**Revendications**

1. Méthode pour assembler deux sections d'une chaîne à neige, caractérisée en ce que l'assemblage est effectué au moyen d'un élément de liaison de forme allongée possédant à chacune de ses deux extrémités une fente longitudinale (2, 3), chaque fente étant originellement ouverte vers l'extérieur et au moins aussi large que l'épaisseur nominale des maillons des sections de la chaîne, en introduisant les deux jambages opposés d'un maillon (10, 11) de chacune des sections dans chaque fente, les fentes étant ensuite compressées jusqu'à ce que chaque fente emprisonne les deux jambages d'un maillon.

2. Méthode selon la revendication 1, caractérisée en ce que la compression des deux fentes est obtenue simultanément, par application sur l'élément de liaison d'une pression transversale aux fentes et suffisamment forte pour provoquer une déformation plastique de l'élément de liaison.

3. Méthode selon la revendication 2, caractérisée en ce que la pression est appliquée jusqu'à fermeture des fentes à leur extrémité originellement ouverte.

4. Méthode selon une des revendications précédentes, caractérisée en ce qu'après la compression on clôt l'extrémité ouverte des fentes par soudure.

5. Méthode selon une des revendications précédentes, caractérisée en ce qu'après la compression des fentes on trempe l'élément de liaison en même temps que les sections de chaîne.

6. Elément de liaison pour réaliser la méthode selon la revendication 1, caractérisé en ce qu'au moins une de ses fentes présente deux indentations et que la distance entre les centres de celles-ci est essentiellement égale à la plus grande largeur des sections de chaîne moins l'épaisseur nominale des maillons.

7. Elément de liaison selon la revendication 6, caractérisé en ce qu'il est fait de tôle estampée.

8. Elément de liaison selon une des revendications 6 ou 7, caractérisé en ce qu'il est fait du même matériau que les sections de chaîne.

9. Chaîne à neige composée de sections de chaîne assemblées en plusieurs points selon la méthode de la revendication 1, caractérisée en ce qu'en un certain nombre de ces points l'élément de liaison est orienté en la direction d'avance de la chaîne à neige.

Fig.1

Fig.2

Fig.3